# EUROPEAN PATENT APPLICATION

(11) **EP 0 887 968 A1**
(43) Date of publication of application: **30.12.1998**
(21) Application number: 96903244.0
(22) Date of filing: 27.02.1996
(51) Int. Cl.: H04L 12/00, H04L 12/56, H04M 3/00

(54) **METHOD AND DEVICE FOR DESIGNATING DESIGN CONDITION OF COMMUNICATION NETWORK**

(71) Applicant: Athena Telecom Lab, Inc., Koganei-shi, Tokyo 184 (JP)
(72) Inventor: KAMIMURA, Kunio, Tokyo 184 (JP)
(74) Representative: Desrousseaux, Grégoire Marie
(86) International application number: JP9600441
(87) International publication number: WO9732418

(57) **Abstract**

A communication network is adapted to the definitions of specifications of provided communication service and the definitions of specifications of requested communication service without designating communication equipment. Therefore, even when no communication equipment is designated, a communication service model can be provided to another communication network model, or the design drawings of a communication network except for the communication equipment can be prepared. The communication equipment can be selected at any time, which is consistent to the definitions of specifications of the provided and requested communication services, the model of communication service provided to other models of communication network models, and the models of communication service connected to the model of the communication equipment.

## Description

### TECHNICAL FIELD

### Section 1: Technical field

This invention relates to the method and apparatus for determining conditions of making the design drawings of a communications network.

### BACKGROUND TECHNOLOGY

### Section 2: Design technology of communications network

To make the design drawings of communications network is to simulate the process of making a real communications network. Design matters of communications network design are listed in the second chapter, The way of making communications network, page 9-43 of Information and communication handbook edited by information and communication handbook's editor board and published by Ohm Company in 1987. This chapter describes each design matters, such as basic scheme of switching, network topology, routing principle, circuit engineering rule, traffic design of switching network and so on. "Basic scheme of switching" shows switching principle of a communications network and shows mechanism of the simplest switching system or switching equipment based on the principle. "Basic scheme of transmission" shows a principle of transmission in a communications network for information transmission. In other words, the basic scheme of transmission shows mechanism of the simplest transmission equipment form that is based on the principle. We call both switching equipment and transmission equipment as communications equipment, and we call both switching principles and transmission principles as basic scheme of communications.

When you make the design drawings of communications network that has a certain degree of reality, design matters of communications network mentioned above, that are design conditions for making design drawings of communications network, cannot be designated independently. For example, routing principle should be identified before designation of network topology, and the communications facilities functioned to implement routing principle are essential in the designation of routing principle. Actual functions of routing principle are different by basic scheme of switching or basic scheme of communication. The calculation algorithm of circuit number and the calculation algorithm of circuit capacity are also very different by basic scheme of switching or basic scheme of communication. The details are indicated by specifications for communications equipment and the circuit standard, they are to be used in its communications facilities.

### Section 3: Existing communications network design system

Traditional design system for communication networks fixes communications equipment as the conditions for making communications network design drawings that are communication network model, or designates basic scheme of communications assuming the simple communications equipment implicitly in advance. Even in the system that allows operator to designate communications equipment and basic scheme of communications, the designation is carried out before designing communications network.

For example, TEAMS reported in "Towards higher efficiency in the work of network design" by Hiroshi Okabe, NTT Technology journal (Vol.4, No.12, 40-41 page, 1992) designates basic scheme of communications beforehand. PLANNER reported in " The expert system for design support of companies private telecommunication network- STRATEGIST & PLANNER" by Kamimura and Nakajima, NTT R & D, Vol.38, No.11 page 1377-1386,1989 focuses on designing communications network with the specific switching equipment called HPAX. STRATEGIST first designates basic scheme of communications beforehand and evaluates communications networks.

Many other conditions in communications network design are decided by the designation of communications equipment. In other words, the functions and specifications for communications equipment limit calculation algorithm of circuit number, calculation algorithm of circuit capacity, routing principle and network topology. Even if there is some room for choice, it is very limited.

### Section 4: What is inconvenient?

In some cases, operator needs to choose a suitable communications equipment fit for situation of communication network model on the hallway of design. It is a serious problem for the people in that position to choose communications equipment. However, there have been no way or the equipment for realizing this procedure. Even if communication circuits are requested, there have been necessary to designate communications equipment.

### Section 5: When design drawings of multiple correlated communications network are made, inconvenience can happen

In the case that multiple communications networks have relationships of providing and using communication circuit, there has been no practical system of making design drawings that correctly show these relationships. However, the method and equipment for making communication network model without any contradiction has been devised by the patent application of number 8-238386.

This invention introduces a method figuring out just one design drawings, models of communication networks at one time and uses other models of communication networks to provide communication service models when models of communication networks are representing relationship of providing and using communication circuits among these models of communication networks. However, since specification is necessary for providing communication circuit, it was first necessary to designate communications equipment. Therefore, we have to first provide communication circuit to other communications network that designates the communications equipment of communications network model. Thus at the phase of making detail structure of the communications network model, the communications equipment is already designated. In other words, it was impossible to make communications network model to a certain extent and to choose the suitable communications equipment for the circumstances that have become clear.

### Section 6: Problems to be solved by this invention

A purpose of this invention is to make the selection of communications equipment possible at the optional stage (halfway or final stage) of making a design drawings of communications network. And also it is to enable to make design drawings of communications network except for communications equipment without designating communications equipment.

### Section 7: Confirmation of terms

This description was "communication services" that generalizes the concept of communication circuit. Communication services means physical mediums like optical fiber, satellite circuits, twisted pair cable and circuits provided as communications network services like NTT's private circuit, communication circuits provided as logical connections like VC (Virtual Channel) of ATM and mediums or circuits like Ethernet that can connect more than 3 communications apparatuses. And service of which circuit number changes probabilistically is also called as communication service.

Design drawings of communications network are also communication network models. Combining communication link models, communication service models, communication points (communication node) models, and communications equipment models makes communication network model. Communication points are logical start and end points of communication circuits. There are many examples, in which communication points and communications equipment are taken as same things. But in this description, they shall be treated as different things. In other words, it is the communications equipment that implements logical existence of communication points. It is the communication link that shows the logical connection of communication points and it is the communication services that realize the communication link.

### DISCLOSURE OF INVENTION

### Section 8: Specifications for providing communication services (PCS)

The first device of this invention is to set definition of specifications for providing communication services (PCS) to a communication network model without designating communications equipment.

### Section 8.1: Meaning of specifications for PCS

Specifications for PCS are a collection of conditions (menu in other words) for communication services provided by a communications network. Specifications for PCS contains both source data for characteristics of communication services and criteria whether service can be provider or not.

There are examples of contents as follow. Technical standards for PCS of communications network (two-wired analog circuits, ISDN-B channel circuits, Ethernet connection circuits etc.). Available series of circuit speed. Providing area (spots or areas where services can be provided or a combination of spots or areas where services can be provided). Prices (tariffs) and service quality (nominal value of quality, guaranteed value etc.). And it is possible to set maximum volume of communication for each combination of spots or areas.

Specifications for PCS also contain data of interface of providing communication services. In other words, it is possible to define specifications for PCS by designating interface of providing communication services. For example, communication terminals and communications network interface, DTE/DCE interface, such as ISDN basic (2B+D) interface, IEEE802.3 interface, two-wired analog circuits interface, 64kbpsV.35 circuits and I interface can be designated.

### Section 8.2: Every kind of specifications for PCS

One of the simplest specifications for PCS is only the instruction to provide communication services just as requested. If there is no specifications for PCS or no information for the contents, it can be recognized as an instruction that system provides communication services just as requested.

Another example, it is only the instruction to refuse every kind communication service request. When there is no specifications for PCS or when there is no data in PCS, it can be recognized as an instruction to refuse every communication service request.

It is also possible to give only the standards for distinguishing the communication services to specifications for PCS.
It is possible to choose among following data of standards as communication services, and to assign this data to specifications for PCS, according to the precision of communications network model or according to the evaluating terms of the design drawings of communications network. Available series of circuit speed. Providing area. Prices (tariffs) and service quality (nominal values of quality, guaranteed values etc.). Interface that provides communication services. And it is also possible to assign data other than the above mentioned to specifications for PCS.

### Section 8.3: Examples of specifications for PCS

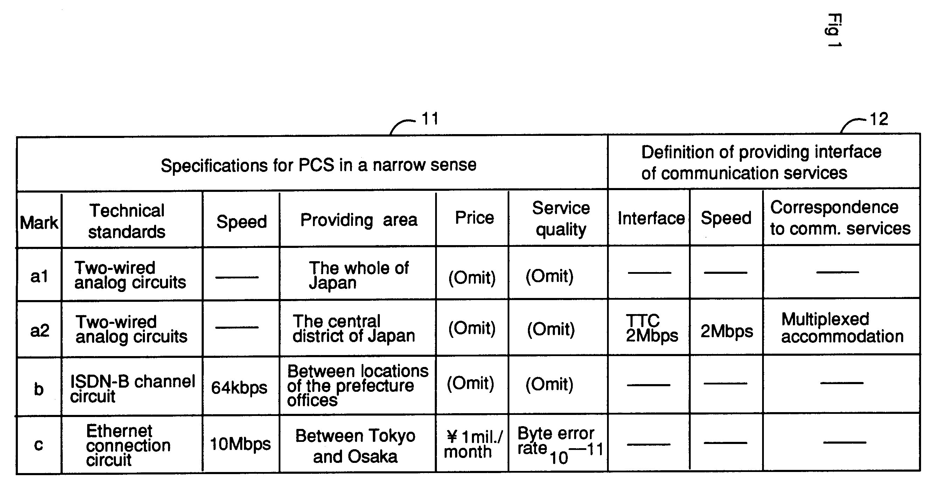

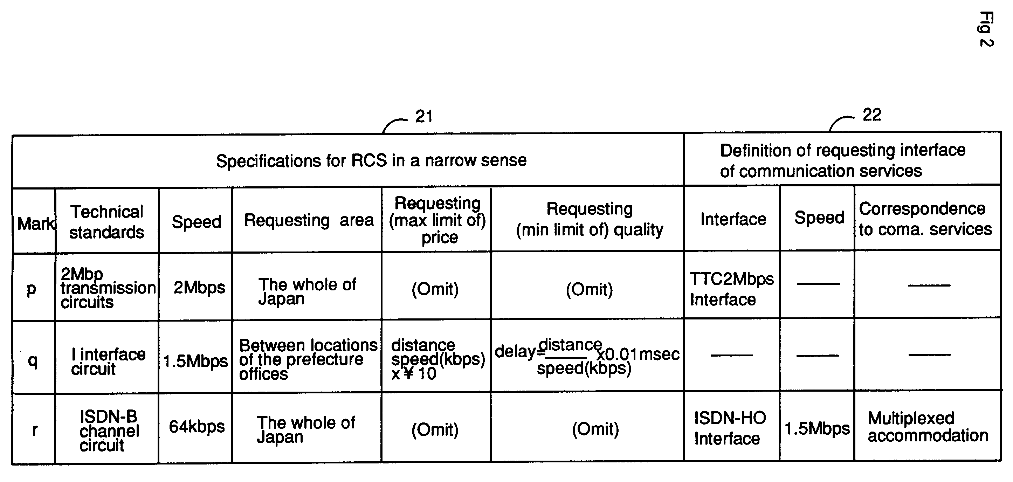

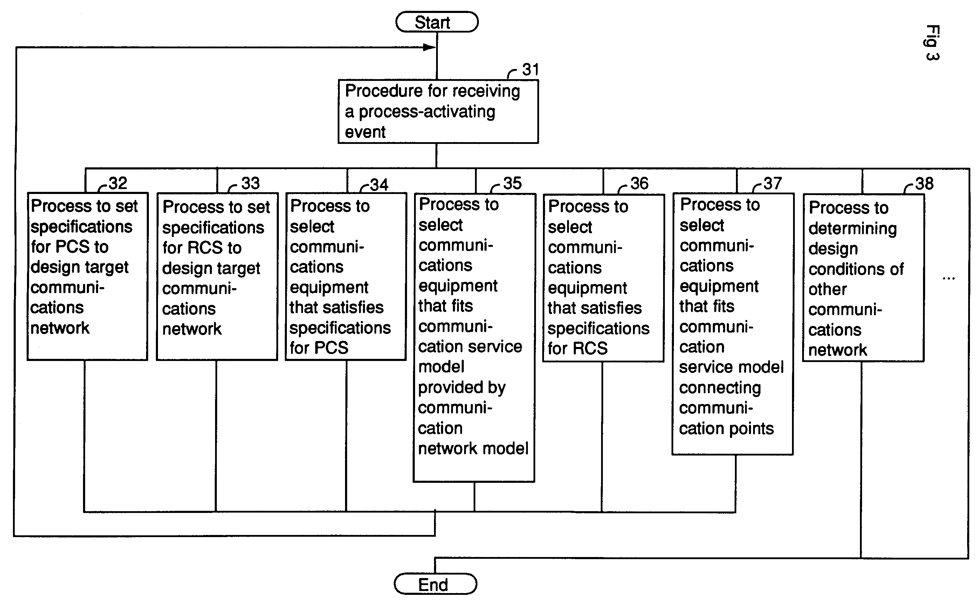

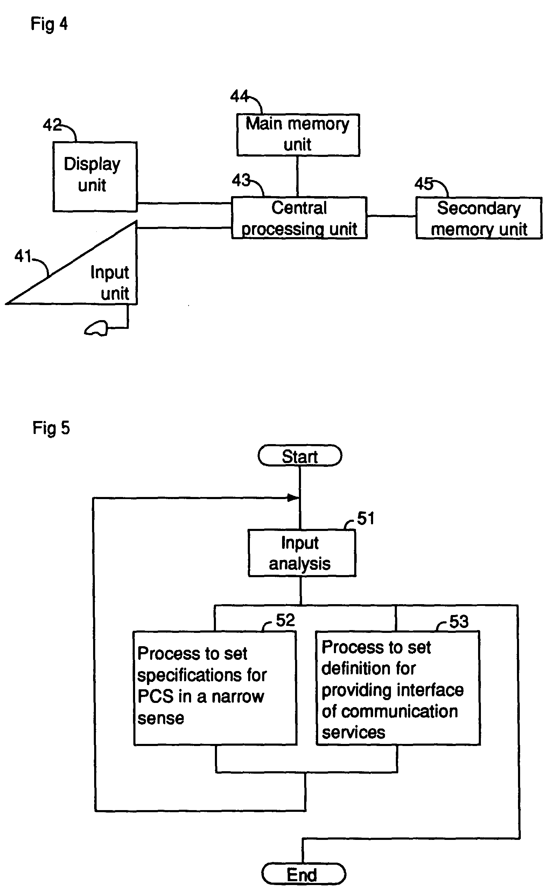

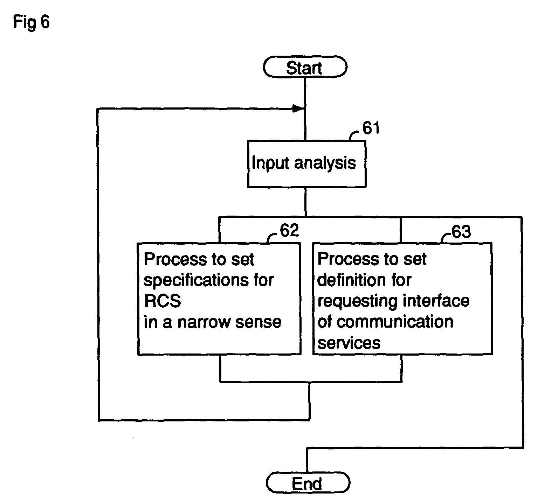

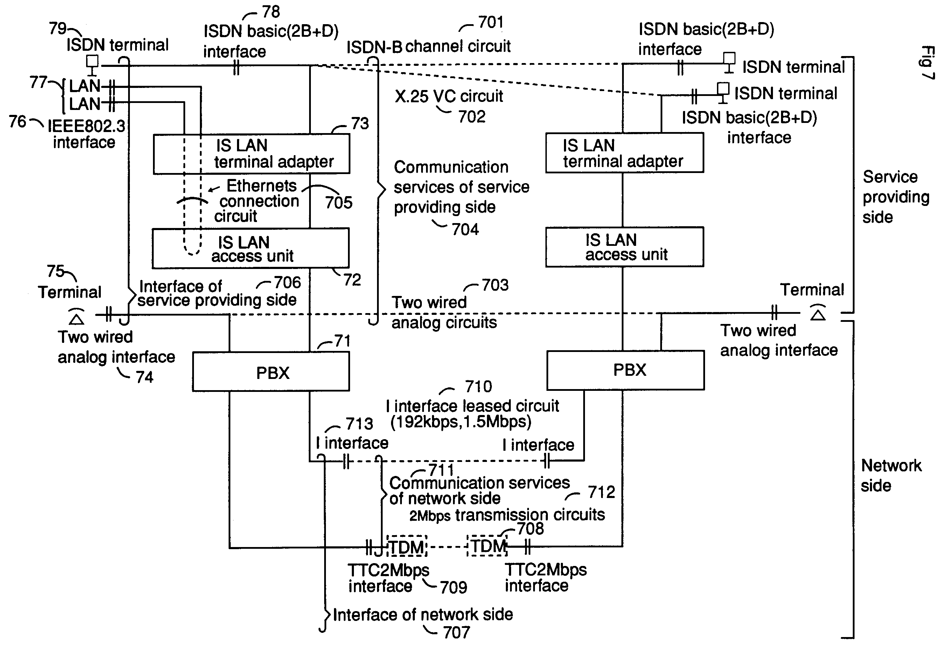

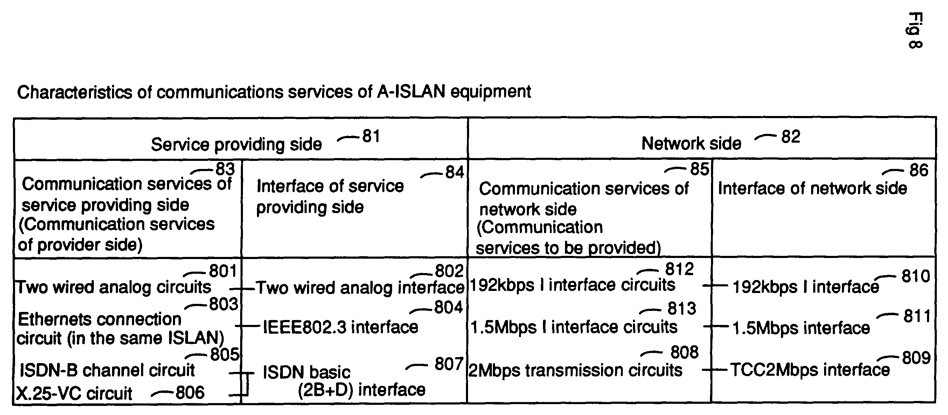

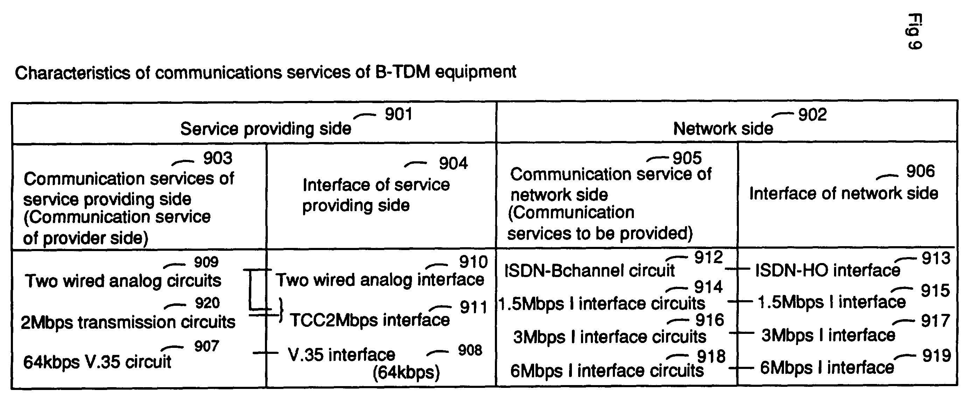

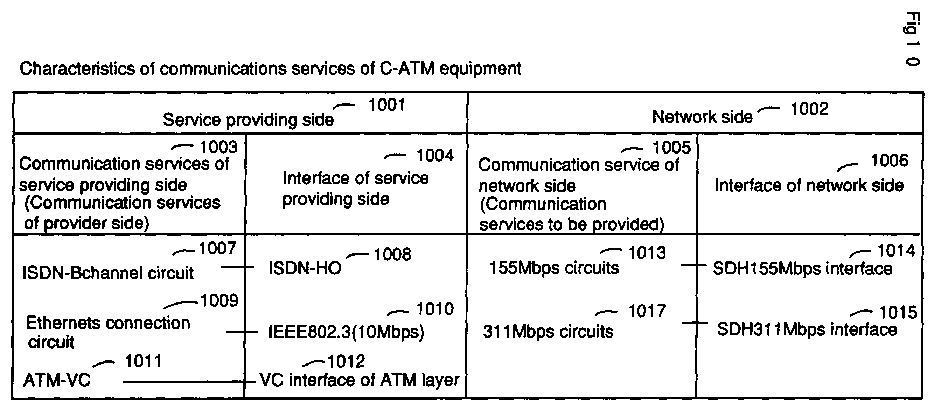

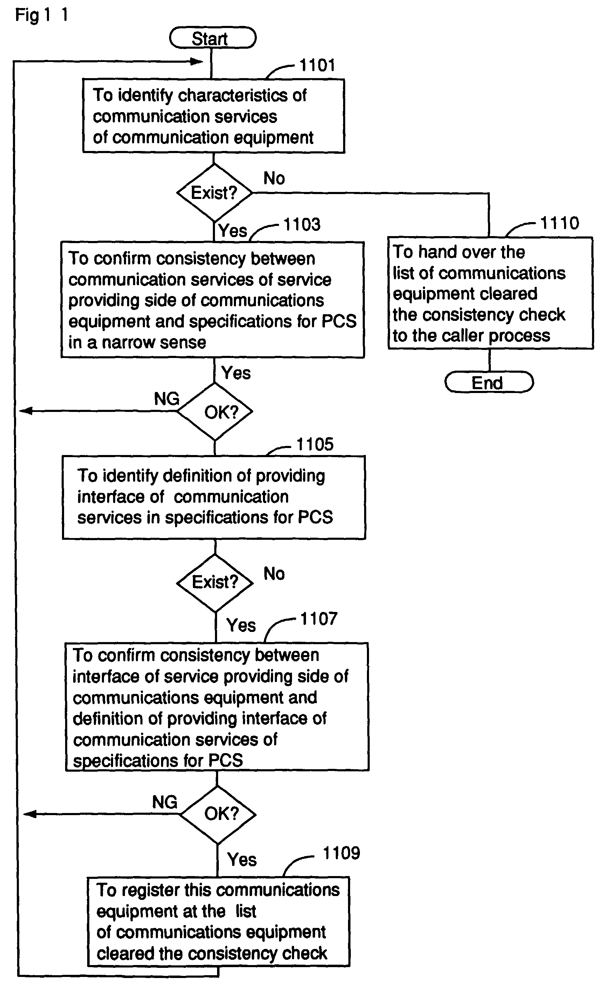

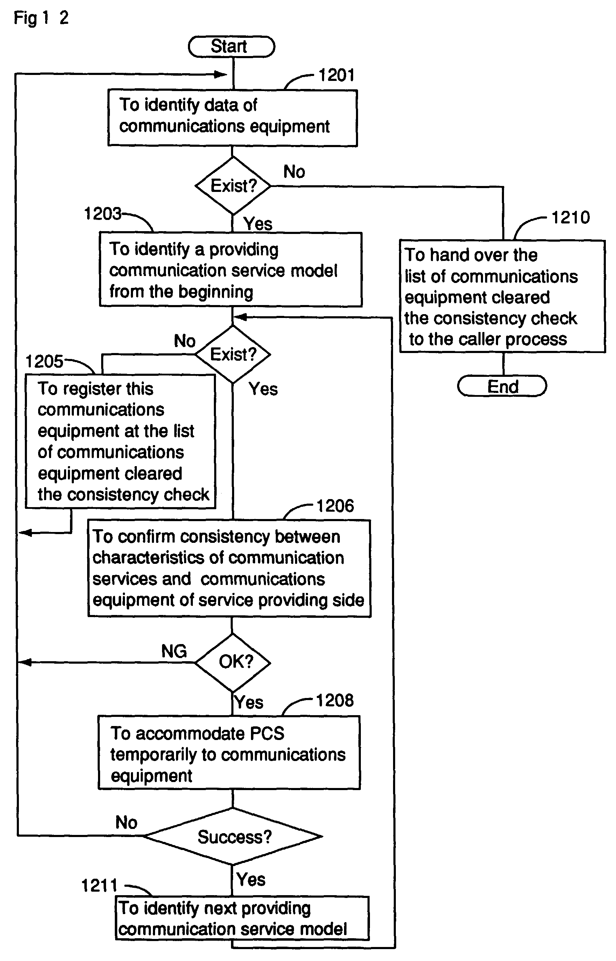

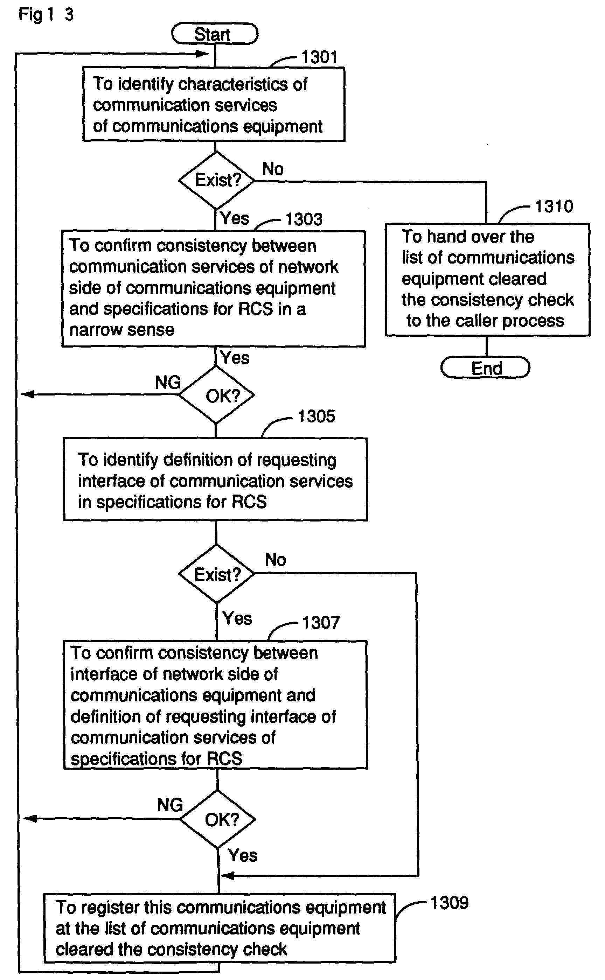

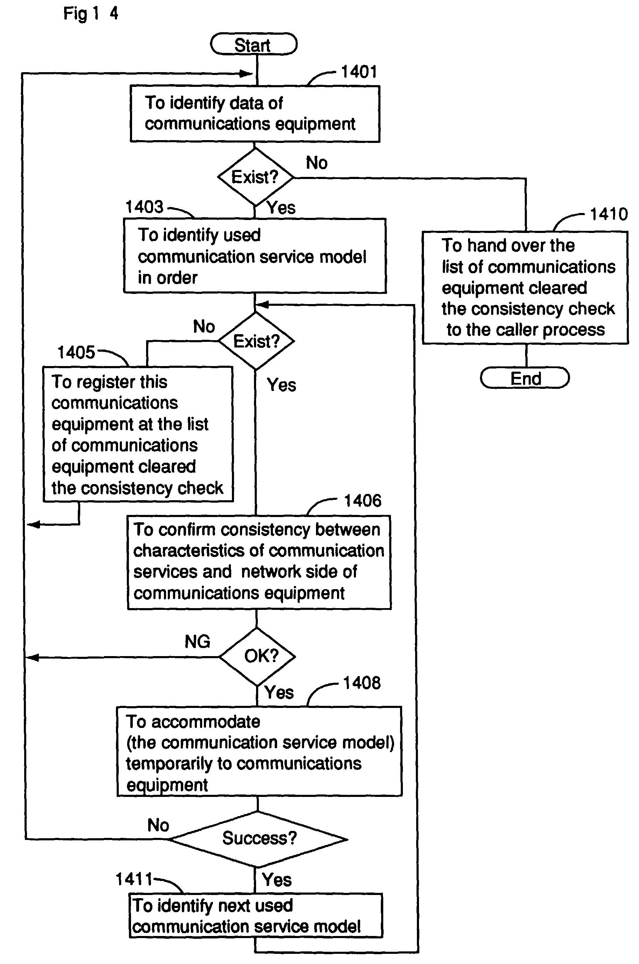

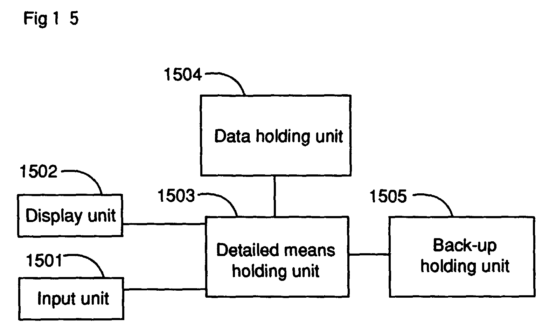

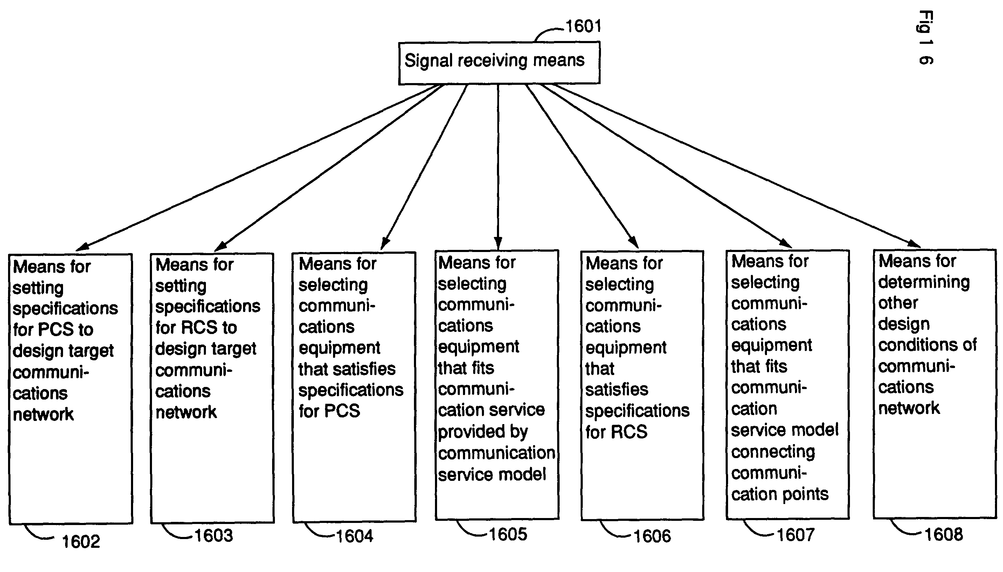

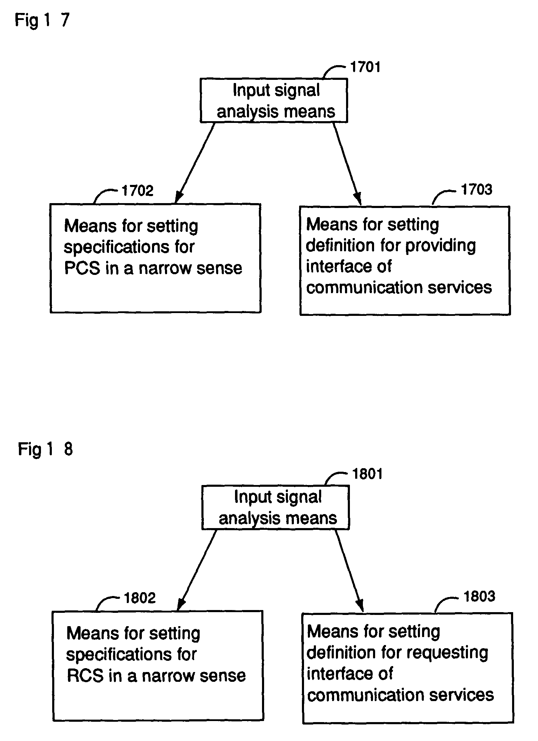

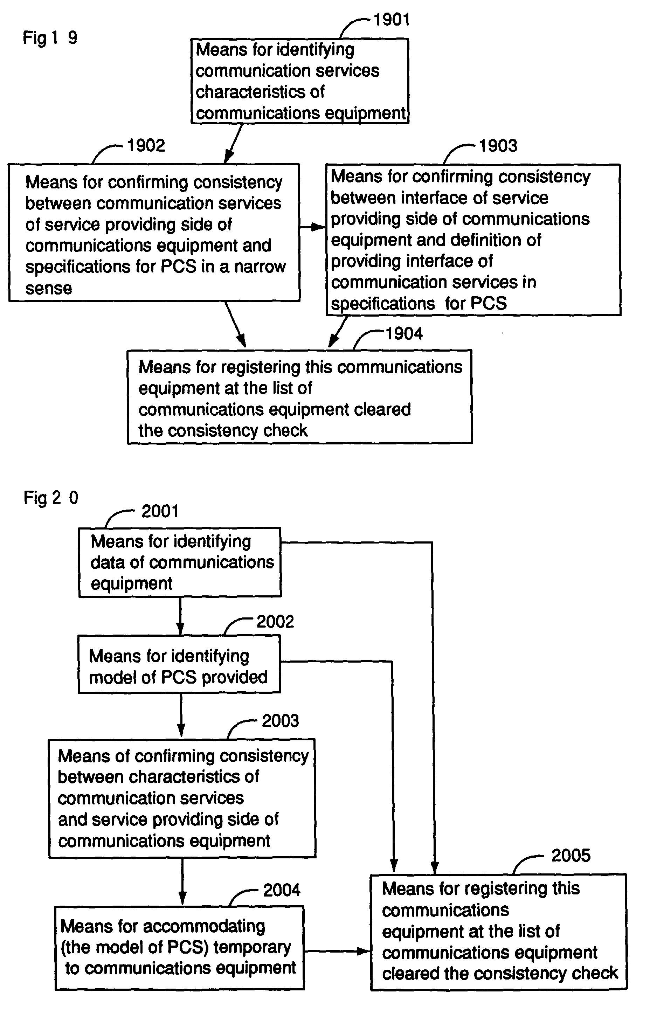

In FIG. 1, specifications for PCS is divided into specifications for PCS in a narrow sense 11 and definition of providing interface of communication services 12. Four kinds of examples of specifications for requesting communication services (RCS), a1, a2 b and c are shown. In FIG. 1, terms of specifications for PCS 11 are technical standards, speed, providing area, price and service quality. And terms of definition of providing interface of communication services 12 are interface, speed and correspondence to communication services. In some cases, it is sufficient to designate specifications for PCS in a narrow sense 11. In other cases, it is not sufficient and in addition it is necessary to designate interface of communications equipment for providing circuits, that is definition of providing interface of communication services 12.

For example, two-wired analog circuits can be implemented by twisted pair lines or by multiplexed with TTC2Mbps interface used as the interface of telephone switching system and TDM equipment. Furthermore, ISDN-B channel circuit can be provided by both ISDN basic (2B+D) interface and ISDN-H0 interface. Specifications for PCS can be precisely described with definition of interface of PCS 12. On the other hand, if only a part of specifications for PCS in a narrow sense 11 or definition of providing interface of communication services 12 is designated, the number of types of communications equipment that fits the definition will increase. (Section 15.6.1, Section 15.8.1)

In FIG. 1, there are two types of a1 and a2 of specifications for PCS of two-wired analog circuits (two-wired analog end to end circuits). In a2, designates to use TTC2Mbps as definition of providing interface of communication services (in other words, communications equipment interface of provider side). Providing are of a1 is the whole of Japan and providing area of a2 is the central district of Japan. And "b" is an example of specifications for PCS of ISDN-B channel circuit. Since there is no designation for definition of providing interface of communication services, it is possible that either ISDN basic (2B+D) interface or ISDN-H0 interface is available. Speed is 64kbps and the providing areas are between locations of the prefecture offices. The low "c" is an example of specifications for PCS for Ethernet connection circuits, circuits that mutually connects Ethernet. The speed of "c" is 10 Mbps, the providing area is between Tokyo and Osaka, the price is 100 per month and service quality of byte error rate is -11th power of 10.

### Section 8.4: The effects and correspondence to claims

Claim 1 and 9 is to set specifications for PCS to communication network model without designation of communications equipment.

In traditional communication design systems, communications network as design target is limited to only one and specifications for PCS or equivalents should be assigned to communication networks of provider side of communication services. Note that the conceptual communications network with specifications for PCS was not a design target but a background communications network from the design target communications network. In other words, specifications for PCS was assigned to background communication networks only for using PCS information, though basic scheme of switching and switching system are tacitly assumed by these specifications for PCS.

Claim 1 and 9 of this invention have novelty in giving of specifications for PCS in design target communications network (not background). What have differentiated from the traditional design systems are as follows. One is to make design drawings of communications network without designating communications equipment (section 10). Next one is to select communications equipment based on the information of the design drawings already made (section 4, section12, section 13). And the final one is to aim to implement making design drawings of multiple communications networks connected by relations of providing and usage of communication services. With the process of claim 1 and 9, communication services can be provided to other design target communications network. Moreover, it is possible to make design drawings of communications network except for communications equipment (section 10) by designating design conditions. It is also possible to end the design of communications network at this phase. In addition, it is possible to select communications equipment that fits pre-determined conditions of communication service models already provided. It is also possible to select communications equipment that satisfies specifications for PCS at any phase of network design. Claim 4 and 5 derived from claim 1 and claim 12 and 13 derived from 9 describe these mechanisms.

### Section 9: Specifications for requesting communication services (RCS)

The next device of this invention is to set specifications for RCS to communication network model without designating communications equipment.

### Section 9.1: What is meant by specifications for RCS

Specifications for RCS is to determine the necessary conditions of communication services connecting communication points when you make design drawings of communications networks.

For example, we have technical standards of communication services, available series (or range) of circuit speed that may be requested, requesting area (locations, areas, combinations of locations and areas, which may be requested), requesting price at most and requesting quality at least. Specifications for RCS can contain data of communication service interface. For example, it is possible to designate TTC2Mbps interface, I interface, ISDN-H0 interface, SDH interface. Specifications for RCS designate parameter range of communication services to be requested. Actual communication service request designates a specific value in this range, in making design drawings of communications network.

### Section 9.2: Specifications for RCS

Before requesting communication services, which will be used in design drawings of a communication network, to another communications network, details of this request can be decided, referring to specifications for RCS even if there is no designation of communication equipment. The process is shown below.

Suppose that a communication network model provides communication service models to another communication network model. Making the design drawings of this communications network is to make communication network model that provides these communication service models. This process first gets basic request specifications to communication links, such as requests on circuit number, circuit speed, communication points to be connected and so on by Flow Assignment Algorithm and Capacity Assignment Algorithm.

"Flow Assignment Algorithm and Capacity Assignment Algorithm is explained" by L. Kleinrock in Queuing Systems, Volume 2: Computer Applications, John Willey & Sons, Inc., New York, in 1979. They are equivalent to the routing principle and the circuit engineering rule described in the second chapter, The way of making communication network (page9-43) of Information and communication handbook, edited by information and communication handbook editor board, Ohm Company in 1987. Comparing this basic request specifications with specifications for RCS, a detailed request to communication services, which is a request to other communication network model, is decided. For example, suppose that specifications for RCS are at least 64kbps of circuit speed and at least 5 of circuits. The contents of RCS to other communication network model will be 5circuits 64kbps from basic request specifications for four of 57.5kbps circuit. Requests of communication services will denied when communication points (for example Hachioji, Matsumoto) that are designated by the basic request specifications circuits connecting between Hachioji and Matsumoto are outside of communication services area planned to request by specifications for RCS (for example, prefecture offices throughout Japan). In this case, the request of communication services to other communication network model will be called off.

### Section 9.3: Simple example of specification for RCS

One of the simplest specifications for RCS is a indication that just use the basic request specifications as to other communication network model without any change. When there is no specifications for RCS or contents, it can be interpreted that basic request specifications will be directly requested to other communication network model without any change. It is also possible to assign only technical standards to distinguish communication services to specifications for RCS. It is possible to select data, such as technical standards of communication services, providing area, price (tariff), quality of service (nominal guaranteed etc.) and interface that provides communication services and to assign them to specifications for RCS. This selection will be decided by the precision of communication network model and evaluation points on design drawings of communications network. And you may also assign the information other than the above mentioned to specifications for RCS.

### Section 9.4: Examples of specifications for RCS

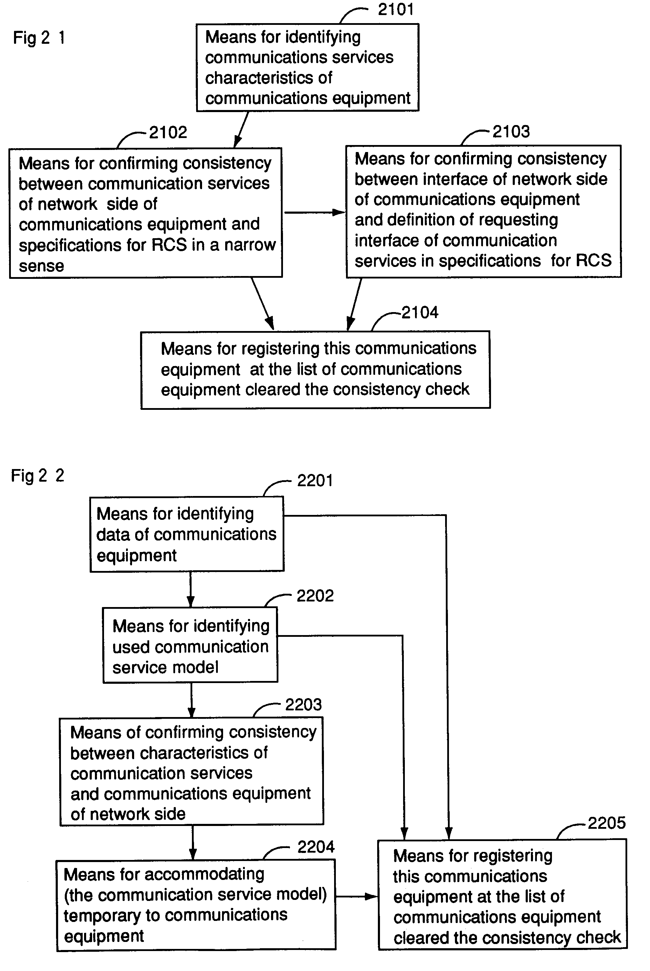

In FIG.2, specifications for RCS is divided into specifications for RCS in a narrow sense 21 and requesting interface of communication service 22. FIG.2 shows three examples that are p, q, and r of specification for RCS.

Items of specifications for RCS in a narrow sense 21 in FIG.2 are technical standards, speed, requesting area, requesting (maximum limit of) price, (minimum limit of) requesting quality of service. It is possible that requesting price designates average price other than limit of price. And it is also possible that requesting quality of service designates 95% value, average value, upper and lower limits and distribution other than minimum. Items of requesting interface of communication services 22 are interface, speed, and correspondence to communication services. RCS is communication services that connect communications equipment. There is the case that it is sufficient just by giving specifications for RCS in a narrow sense 21 and there is the case with additional necessity to designate interface with the communications equipment that accommodates services, that is, to designate requesting interface of communication services 22.

FIG.2 defines "p" as specifications for RCS of 2Mbps transmission circuits. The speed of "p" is 2 Mbps. The possible requesting area of "p" is the whole of Japan. The low "q" is specifications for RCS of I interface of 1.5Mbps circuit. The speed of "q" is 1.5Mbps. The possible requesting areas are among locations of prefecture offices. The requesting (limit of) price is (distance x speed (kbps)×10yen). The requesting (minimum limit of) quality of service is (distance×0.01msec/speed (kbps)). The row "r" is specifications for RCS of ISDN-B channel circuit. The speed of"r" is 64kbps. The possible requesting area is the whole of Japan. In addition, "r" designates ISDN-H0 multiplexed interface as requesting interface of communication services that is interface of request side communications equipment.

### Section 9.5: The effect and correspondence to claims

Claim 2 and 10 set specifications for RCS to communications network directly, without designating communications equipment. There is no example of introducing the concept of specification for RCS separated from communications equipment.

If specifications for RCS are supplied, it is possible to check consistency between the design target communication network model and communication network models of provider side of communication services without designating communications equipment. When physical transmission media, such as optical fiber, satellite circuits, twisted pair lines, are directly used to connect communication points, it is sufficient to verify consistency between specifications for RCS and specifications for transmission media.

As an example, let us suppose that communications equipment has been designated in communications network of provider side of communication services. It is possible to determine whether the relationship between request and provision is consistent verification of consistency of between specifications for RCS of communications network of request side and specifications for communications equipment of communications network of provider side. For another example, let us suppose that specifications for PCS have been given to communications network of provider side of communication services. It is possible to determine whether the relationship between request and provision is consistent by verification of consistency between specifications for RCS of communications network of request side and specifications for PCS of communications network of provider side.

Claim 2 and 10 make this consistency determination possible before making design drawings of communications network of request side, without designating communications equipment of communications network of request side of communication services.

After designing communications network without designating communications equipment, it is possible to select communication equipment that fit communication service models connecting communication points. And it is also possible to choose communications equipment that fits specifications for RCS at anytime. Claim 6 and 7 derived from claim 2 and claim 14 and 15 derived from claim 10 describe these mechanisms.

### Section 10: Specifications for PCS and specifications for RCS

Claim 3 and 11 describe specifications for both PCS and RCS to a communications network. If both specifications for PCS and specifications for RCS are designated to a communications network, it is possible to confirm consistency of relationship with other communications network models (Section 9.5) without designating communications equipment and without making design drawings of this communications network. And from both specifications for PCS and specifications for RCS, you can focus on equipment that fit these specifications among the original list of communications equipment specified. We can not pin point a basic scheme of communications only by one side of definition. But if both specifications are available, we can point out basic scheme of communication in many cases. Section 12 and 13 shows practical examples.

Suppose that Flow Assignment Algorithm and Capacity Assignment Algorithm which show the relationship with communication services as the parts of constituent element models of PCS and communications network are designated in addition to specifications for PCS and specifications for RCS. In this situation, it is possible to make the design drawings of communications network except for communications equipment without designating communications equipment (Section 9.2). In other words, communication service model is provided to other communication network model based on specifications for PCS and it is possible to find out the pass model (series of communication nodes and communication links) that provides this communication service and communication service models used in these links. It is not necessary to designate communications equipment when the information on communications equipment is not necessary such as cases that communication circuit is merely considered. There is no need to say that it is possible to designate communications equipment at any phase of network design if you realize that information on communications equipment is necessary. It is possible to define the relationship with other communications network necessarily and sufficiently when specifications for both PCS and RCS are designated, even if basic scheme of communication or communications equipment does not exist at the present time. Communications network model without communications equipment can be generated by additional designation of Flow Assignment Algorithm and Capacity Assignment Algorithm.

Above mentioned are the effects of claim 3 and 11, in other words, the effects of "setting specifications for PCS to communications network" and "setting specifications for RCS to communications network".

### Section 11: Designation of communications equipment

Communications equipment practically provides communication services. Usually several types of communications equipment work together to provide a communication service, though there is a case that just one type of communications equipment provides.

Giving an example of telephone, there is the case that you set communication circuits connecting telephones accommodated in same switching machine. This is the example that one type of communications equipment provides communication services. And telephones accommodated in 2 switching systems are connected through a circuit connecting these switching systems. This circuit may go through other switching systems. These are the examples that multiple types of communications equipment collaborate to provide one communication service. For ease of collaboration, same series of products are used as communications equipment of a network in many cases. Sometimes it is possible to combine different series of products.

Designating communications equipment of communications network is to designate a type of communications equipment that can provide communication services or a combination of types of equipment. And selecting communications equipment for communications network is to select a combination of this communications equipment type that fits the conditions decided already. It means that these (single or plural) equipment types are set at communication points of communications network. And one type of communications equipment provides communication service or multiple types of communications equipment collaborate to provide communication services. Other communications network provides circuits connecting them. We often use a communication medium connecting communications equipment directly.

Communications equipment selected in claim 4,5,6,7,12,13,14 and 15 can be single type or plural types of equipment.

### Section 12: Selection of communications equipment fitting provider side of communication services

Section 8 explained about setting specifications for PCS to a communications network without designating communications equipment. Afterwards one of the method or means for selecting communications equipment at any phase of network design is to select communications equipment that satisfies specifications for PCS. Claim 4 and 12 describe these mechanisms. The details are shown in section 12.1

Other method or means is to select communications equipment that fits communication service model provided by communication network model. Claim 5 and 13 describe these mechanisms. The details are shown in section 12.2.

### Section 12.1: Selection of communications equipment that satisfies specifications for PCS

You should select single type or plural types of communications equipment in selection of communications equipment that satisfies specifications for PCS (section 11). These communications equipment are set up at communication points and all communication services satisfy specifications for PCS.

For example, X communications equipment is set up at all communication points of communications network. You can say that X communications equipment satisfies specifications for PCS when characteristics of all communication services provided by the combination satisfies specifications for PCS. Here, communication services provided by X communications equipment is the communication services provided by single type X or plural types X of communications equipment. In the case of combination of plural types in serial communications equipment, you designate the combination of the series name. For example, Y series consists of Y1 and Y2 communications equipment types. In all communication nodes of communications network, suppose that Y1 or Y2 communications equipment is set up. You can say that Y series satisfies specifications for PCS when characteristics of communication services provided by the combination that satisfies specifications for PCS. If combination of different equipment types or different series of equipment types can provide communication services, this combination can also be one of the candidates for selection.

### Section 12.2: To select communications equipment that fits communication service model provided by communication network model

You should select single type or plural types of communications equipment in selection of communications equipment that fits communication service model provided by communication network model (section 11). It is possible to implement communication service model already provided by communication network model from setting up them at communication points. Since communication service model provided by communication network model exhibits only some portions of specifications for PCS, to select communications equipment that fits communication service model provided by communication network model has greater choice on selecting communications equipment than to select communications equipment that satisfies specifications for PCS. However, new communication service model provided after the selection of communication equipment may yield inconsistency. Therefore, it is desirable to select communications equipment that fits communication service model provided by communication network model after all providing communication service model has been decided. After new communication service model has been provided, it is also possible to select communications equipment again. On the other hand, it is possible to select communications equipment that satisfies specifications for PCS anytime after specifications for PCS has been assigned and it is not necessary to select communications equipment again.

### Section 13: To select communications equipment fitting requesting side of communication services

Section 9 explained about setting specifications for RCS to communications network without designating communications equipment. Afterwards one of the method or means for selecting communications equipment at any phase is to select communications equipment that satisfies specifications for RCS. Claim 6 and 14 describe these mechanisms. The details are shown in section 13.1.

Other method or means is to select communications equipment that fits communication service model used connecting communication points in communication network model. Claim 7 and 15 describe these mechanisms and the details are shown in section 13.2.

### Section 13.1: To select communications equipment that satisfies specifications for RCS

You should select single type or plural types of communications equipment in selection of communications equipment that satisfies specifications for RCS (section 11). These communications equipment are set up at communication points and all communication services connecting them satisfy specifications for RCS.

### Section 13.2: To select communications equipment that fits communication service model connecting communication points

You should select single type or plural types of communications equipment in selection of communications equipment that fits communication service model connecting communication points (section 11). Being set up at communication points, equipment can accommodate all communication service models connecting communication points there.

Since communication service model connecting communication points in the model of communications network exhibits only some portions of specifications for RCS, to select communications equipment that fits communication service model connecting communication points has greater choice of selecting communications equipment than to select communications equipment that satisfies specifications for RCS. However, new communication service model connecting communication points after selecting communications equipment may yield inconsistency. Therefore, it is desirable to select types of communications equipment that fits communication service models, which are used by the communications network model after all communication service models are listed to be used. After using new communication service model, it is possible to choose communications equipment again. On the other hand, it is possible to select communications equipment that satisfies specifications for RCS anytime after specifications for RCS has been assigned and it is not necessary to choose communications equipment again.

### BRIEF EXPLANATION OF DRAWINGS

### Section 14: Brief explanations of drawings

FIG.1 shows an example of specifications for PCS. FIG.2 shows an example of specifications for RCS. FIG.3 shows constitutional example of a program that implemented method for determining design conditions of communication network. FIG. 4 shows a general constitution of a computer that carries out program implementing methods for determining design conditions of communications network. FIG.5 shows a process that assigns specifications for PCS to the design target communications network. FIG.6 shows a process that sets specification for RCS to the design target communications network. FIG.7 shows constitutional examples of A-ISLAN equipment and its communication services of service providing side, interface of service providing side, communication services of network side and interface of network of A-ISLAN equipment. FIG 8 shows characteristics of communication services of A-ISLAN equipment. FIG. 9 shows characteristics of communication services of B-TDM equipment. FIG.10 shows characteristics of C-ATM equipment. FIG.11 shows a process of selecting communications equipment that satisfies specifications for PCS. FIG. 12 shows details of process of selecting communication equipment that fits communication service models provided by communication network model. FIG.13 shows a process of selecting communications equipment that satisfies specifications for RCS. FIG. 14 shows details of process of selecting communications equipment that fits communication service model connecting communication points. FIG.15 shows an example of equipment that determines design conditions to make design drawings of communications network. FIG. 16 shows constitutional details of detailed means holding unit 1503. FIG.17 shows detailed means for setting specifications for PCS to design target communications network. FIG.18 shows detailed means for setting specifications for RCS to design target communications network. FIG.19 shows detailed means for selecting communications equipment that satisfies specifications for PCS. FIG.20 shows detailed means for selecting communications equipment that fits communication service models provided by communication network model. FIG. 21 shows detailed means for selecting communications equipment that satisfies specifications for RCS. FIG.22 shows detailed means for selecting communications equipment that fits communication service model connecting communication points.

### THE BEST MODE FOR CARRYING OUT THE INVENTION

### Section 15: Implementation of method and apparatus for determining design conditions of communications network

An embodiment of method and apparatus for determining design conditions of communications network is to implement as a computer program. It is usually implemented as a part of communications network design system. Constitutional structure of this program is shown in FIG.3.

Whenever an event of activating process happens, it is analyzed in procedure for receiving a process-activating event 31 and a process corresponding to the event is activated. And an event of activating another process might happen from one process. Each event activates processes as follow. Process to set specifications for PCS to design target communications network 32. Process to set specifications for RCS to design target communications network 33. Process to select communications equipment that satisfies specifications for PCS 34. Process to select communications equipment that fits communication service model provided by communication network model 35. Process to select communications equipment that satisfies specifications for RCS 36. Process to select communications equipment that fits communication service model connecting communication points 37. The mentioned above are the processes directly related to the method and apparatus for determining design conditions of communications network by this invention. We will explain details for each process further below. Furthermore, we have process to determine design conditions of other communications network 38 but omit the details. And it is possible to add the process of making design drawings of communications network but we omit the details. FIG.4 shows general structure of computers that carries out this program. The conditions for making design drawings of communications network inputted from input unit 41 is analyzed in central processing unit 43 and recorded in main memory unit 44. By these conditions, communication network model is built in main memory unit 44. The instruction of selecting communications equipment is also inputted from input unit 41. Central processing unit 43 reads the data of communications equipment recorded in main memory unit 44 and selects communications equipment. The data of selected communications equipment are recorded in main memory unit 44. Display unit 42 shows these situations all the times. Operator evaluates them and then inputs further instructions and data from input unit 41. The data of communications equipment and communication network model on main memory unit 44 will be transferred to secondary memory unit 45 and will be read when the system is reactivated.

### Section 15.1: Example of process that sets specifications for PCS to design target communications network

FIG.5 shows details of process to set specifications for PCS to the design target communications network 32. This process is activated with assignment of communications network to which the specifications for PCS is set. Input is analyzed in input analysis 51. In accordance with content of this input, process to set specifications for PCS in a narrow sense 52 and process to set definition of providing interface of communication services 53 will be activated. Input analysis 51 can be replaced with procedure for receiving a process-activating event 31.

### Section 15.2: Example of process that sets specifications for RCS to design target communications network

FIG.6 shows details of process to set specifications for RCS to the design target communications network 33. This process is activated with assignment of communications network to which the specifications for RCS is set. Input is analyzed in input analysis 61. In accordance with content of this input, process to set specifications for RCS in a narrow sense 62 and process to set definition of requesting interface of communication services 63 will be activated. Input analysis 61 can be replaced with procedure for receiving a process-activating event 31.

### Section 15.3: The first example of characteristics of communication services of communications equipment

Characteristics of communication services of communications equipment is arranged data about PCS and RCS of communications equipment. For the explanation of detailed means and process of selecting communications equipment, it is convenient to arrange characteristics of communication services of communications equipment (Section 15.6.1 and 15.8.1). The example will be shown below.

For example, we have ISLAN, which is now being standardized at IEEE802.9 committee. The equipment type name would be A-ISLAN, which is a combination of ISLAN access unit 72, ISLAN terminal adapter 73 and PBX71. FIG.7 shows conceptual drawing of communication services of service providing side 704 which sets definition of PCS, interface of service providing side 706, communication services of network side 711 which sets definition of RCS and interface of network side 707 of A-ISLAN equipment. FIG. 8 shows arranged data as characteristics of communication services of communications equipment.

### Section 15.3.1: Characters of service providing side

Usually interface of service providing side 706 (FIG.7) opens to public as specifications for communications equipment of service providing side. In other words, it is interface of service providing side 84 (FIG.8). However, communication services of service providing side 704 provided by combining two types of communications equipment are not interface of service providing side 706 itself but theoretical circuits connecting terminals. In FIG. 8, this data is entered at the bottom of communication services of service providing side 83 (communication services of provider side). Previously there is one to one mapping among interface of service providing side 706 and communication services of service providing side 704 in most cases, such as two-wired analog interface provides two-wired analog circuits. Now it becomes to communicate with several people with one interface of service providing side (for example, ISDN basic (2B+D) interface 78) like ISDN terminal. We should distinguish communication services of service providing side 704 as communication circuit connecting communication terminals, and interface of service providing side 706, that is interface of communications terminal and communications network (DTE/DEC interface). In FIG.7, two-wired analog interface 74 of PBX provides two-wired analog circuits 703. FIG. 8 shows this by correspondence among two-wired analog circuits 801 and two-wired analog interface 802. Ethernet connection circuit 705 in FIG. 7 is provided in IEEE802.3 interface 76 of ISLAN terminal adapter 73. This is shown in FIG. 8 by correspondence among Ethernet connection 803 and IEEE802.3 interface 804. Ethernet connection circuit is limited to the connection in same communications equipment. As a result, Ethernet connection circuit 803 in FIG. 8 accompanies with the condition that this circuit should be in the same ISLAN. In FIG. 7, ISDN-B channel circuit 701 and X.25VC circuit 702 that connects ISDN terminal are provided in ISDN basic (2B+D) interface 78 of ISLAN terminal adapter 73. This is shown by correspondence among ISDN-B channel circuit 805 and X.25.VC circuit 806, and ISDN (2B+D) basic interface 807.

If specifications for communication services have no definition of requesting interface of communication services to ISDN-B channel circuit or have ISDN-basic (2B+D) interface, A-ISLAN equipment has no conflict with these specifications for communication services. If specifications for communication services have ISDN-H0 interfaces, A-ISLAN equipment has conflict with these specifications for communication services.

### Section 15.3.2: Characteristics of network side

Interfaces of network side 707 (FIG. 7) usually open to public as specifications for communications equipment of network side. In the case of A-ISLAN, interface of network side 707 is corresponded to communication services of network side 711(communication services connecting communications equipment) one another. However, there are some cases that there is no one to one mapping. For example a case that ISDN-H0 interface is designated. This correspondence is entered in (column below) communication services of network side 85 and (column below) interface of network side 86 in FIG.8. FIG. 7 shows correspondence of I interface leased circuit (192kbps, 1.5Mbps) 710 and I interface 713. FIG. 8 shows correspondence of 192kbps I interface private circuit 812 and 192kbps I interface 810, and correspondence of 1.5Mbps I interface private circuit 813 and 1.5Mbps I interface 811. FIG. 7 shows correspondence of 2Mbps transmission circuits 712 and TTC2Mbps interface 709. FIG.8 shows correspondence of 2Mbps transmission circuits 808 and TTC2Mbps interface 809.

### Section 15.3.3: Selection of communications equipment

It is possible to use characteristics of communication services of communications equipment for confirming consistency between definition of PCS or RCS and communications equipment. Moreover, it is possible to use characteristics of communication services of communications equipment for confirming consistency between communication services already provided or used by communication network model and communications equipment. Other than this, consistency between definition of PCS or RCS and communication equipment should be confirmed on the following conditions. (1) Condition of capacity limitation, such as communication services of service providing side, communication services of network side, terminal of service providing side, number limitation of terminal of network side and maximum volume of process data. (2) Condition of realizable quality range of PCS. Or PCS should satisfy minimum value of service quality. We add these data to characteristics of communications services of communications equipment to do it.

### Section 15.4: The second example of characteristics of communication services of communications equipment

FIG.9 shows characteristics of communication services of other communications equipment. This is the example of TDM and the equipment type name is B-TDM equipment.

Followings are communication services of service providing side 903 (communication services of provider side) and interface of service providing side 904 corresponded to it. There are the cases that two-wired analog interface 910 directly provides two-wired analog circuits 909 and that multiple interface of TTC2Mbps interface 911 provides it. TTC2Mbps interface 911 provides 2Mbps transmission circuits 920.V.35 interface (64kbps) 908 provide 64kbpsV.35 circuits 907.

Followings are communication services of network side 905 (communication services provided to connect communication points) and interface of network side 906 corresponded to it. ISDN-B channel circuit 912 is accommodated in ISDN-H0 interface 913. 1.5Mbps I interface circuits 914 is accommodated in 1.5Mbps I interface 915. "3Mbps I interface circuits 916" is accommodated in 3Mbps I interface 917. "6Mbps I interface circuits 918" is accommodated in 6Mbps I interface 919.

### Section 15.5: The third example of characteristics of communication services of communications equipment

FIG. 10 shows characteristics of communication services of communications equipment. This is the example of ATM exchange equipment and the equipment type name is C-ATM exchange machine.
Followings are communication services of service providing side 1003 (communication services of provider side) and interface of service providing side 1004 corresponded to it. ISDN-H0 interface 1008 provides ISDN-B channel circuit 1007. This is equivalent to A service of AAL layer class (a suspected circuit exchange). IEEE802.3 interface (10Mbps) 1010 provides Ethernet connection circuit 1009. This is equivalent to D service of AAL layer class (a suspected circuit exchange). ATM layer VC interface 1012 provides ATM-VC circuit 1011.

Followings are communication services of network side 1005 (communication services provided to communication points) and interface of network side 1006 corresponded to it. 155Mbps circuit 1013 is accommodated in SDH155Mbps. Interface 1014. 311Mbps circuit 1014 is accommodated in SDH311Mbps interface 1015.

### Section 15.6 Example of process of selecting communications equipment that satisfies specifications for PCS

FIG.11 shows details of process to select communications equipment that satisfies specifications for PCS 34.

First of all, you identify communication services characteristics of communications equipment in order from identifying communication services characteristics of communications equipment 1101. You confirm consistency between communication services of service providing side 83,903,1003 of communications equipment and specifications for PCS in a narrow sense 11 1103. If the consistency check is failed, you move to next communications equipment. If the consistency check is passed, you identify definition of providing interface of communication services 12 in specifications for PCS 1105. If there is no designation, you register this communications equipment at the list of communications equipment cleared the consistency check 1109. If there is designation, you confirm consistency between interface of service providing side of communications equipment 84,904,1004 and definition of providing interface of communication services 12 in specifications for PCS 1107. If the consistency check is failed, you move to next definition of communications equipment. If the consistency check is passed, you register communications equipment in consistency checked list. When there is no next applicable communications equipment, in other words, when the evaluation of all communications equipment is over in identification of communication services characteristics of communications equipment 1101, you hand over the list of communications equipment passed the consistency check to the caller (originated) process 1110. Consequently consistency with other conditions narrows down the number of candidates, which are shown in display unit 12. Operator chooses communications equipment from there or program chooses specific equipment for every communication node from series of communications equipment designated by operator.

### Section 15.6.1: Example of selecting communications equipment that satisfies specifications for PCS

FIG.1 shows a1, a2, b, c, as examples of specifications for PCS. Communications equipment that satisfies each of these and the followings are the examples selected from 3 types of equipment in FIG.8,9, and 10.

The row "a1" is two-wired analog circuits and definition of providing interface of communication services 12 is not designated. Therefore, two-wired analog circuits of A-ISLAN equipment 801 and two-wired analog circuits of B-TDM equipment 909 come under this. In other words, both types of equipment satisfy specifications for PCS (satisfy the consistency). The row "a2" is two-wired analog circuits and TTC2Mbps interface is designated. Only two-wired analog circuits of B-TDM equipment 909 and correspondence to TTC2Mbps interface 911 come under this. In other words, only B-TDM equipment (FIG. 9) satisfies specifications for PCS,"a2". The row "b" is ISDN-B channel circuit and definition of providing interface of communication services. "ISDN-B channel circuit of A-ISLAN equipment 805" and "ISDN-B channel circuit of C-ATM equipment 1007" come under this. In other words, both A-ISLAN equipment and C-ATM exchange equipment satisfy specifications for PCS. The row "c" is Ethernet connection circuit and definition of providing interface of communication services 12. Ethernet connection circuit of A-ISLAN equipment 803 and Ethernet connection circuit of C-ATM equipment 1009 becomes candidate. However, we exclude Ethernet connection circuit of A-ISLAN equipment 803 accompanies with the condition that this circuit should be in same ISLAN since providing area of "c" is between Tokyo and Osaka. Consequently only C-ATM exchange equipment satisfies specifications for PCS, "c".

### Section 15.7: Examples of process that selects communications equipment that fits communication service model provided by communication network model

FIG.12 shows details of process to select communications equipment that fits communication service model provided by communication network model 35. At first, you identify communications equipment in order from process of identifying data of communications equipment 1201, which includes the number of terminal and capacity limitation (section 15.3.3) other than definition of communication services.

Designated communications network identifies a providing communication service model from the beginning 1203 for data of identified communications equipment. And you confirm consistency between characteristics of communication services and communications equipment of service providing side 81,901,1001 1206. What characteristics of communication services is the data given to communication service model, such as technical standards of communication services, speed, providing area, price and quality of service etc. Specifications for PCS of communications network that provides communication services can give them (e.g. FIG. 1). Among this, providing area is any place that satisfies providing area conditions of specifications for PCS in a narrow sense 11(FIG 1). Price and quality of communication services are concretely designated based on designation of price and quality of specifications for PCS in a narrow sense 11(FIG 1). In process of confirming consistency between characteristics of communication services and communications equipment of service providing side 81,901,1001 1206, communications equipment of service providing side 81,901,1001 comes under communication services of service providing side 83,903,1003 and interface of service providing side 84,904,1004. Confirming the consistency of interface of service providing side 84,904,1004, definition of providing interface of communication services 12 should be designated in characteristics of communication services. If the result of confirming between consistency of characteristics of communication services and communications equipment of service providing side 81,901,1001, 1206 is all right, you accommodate PCS temporarily to communications equipment 1208. When it is not possible to be accommodated temporarily because of limitation of the number of terminal and limitation of data volume etc., you move on to next process of communications equipment evaluation. In here, temporary accommodation does not literally mean to be accommodated. It is merely the purpose to confirm whether limitation of the number of terminal and data volume have been cleared or not. If temporary accommodation is possible, you carry out process of identifying next providing communication service model 1211. If it exists, you move to process of confirming consistency between characteristics of communication services and communications equipment of service providing side 81,901,1001, 1206. When the result of confirming consistency between characteristics of communication services and communications equipment of service providing side 81,901,1001, 1206 is not all right, you move to process of identifying the information of communications equipment 1201. In process of identifying a providing communication service model from the beginning, you register this communications equipment at the list of communications equipment cleared the consistency check 1205 when it has become clear that there is no next communication service model. In process of identifying next providing communication service model 1211, you register this communications equipment at the list of communications equipment cleared the consistency checked 1205 when it has become that there is no next communication service model, in other words, when all communication services have been accommodated temporarily. After all communications equipment have been evaluated, you hand over the list of communication equipment cleared the consistency check to the caller (originated) process 1210 and all the processes have been done.

### Section 15.8: Examples of process of selecting communications equipment that satisfies specifications for RCS

FIG.13 shows details of process to select communications equipment that satisfies specifications for RCS 36.

First of all, you identify characteristics of communications services of communications equipment in order, by the step to identify communication services characteristics of communications equipment 1301. After confirming consistency between communication services of network side of communications equipment 85,905,1005 and specifications for RCS in a narrow sense 21 1303, you move to next communications equipment if the consistency check is failed. If the consistency check is passed, you identify definition of requesting interface of communication services in specifications for RCS 22 1305. And if there is no designation, you register this communications equipment at the list of communications equipment cleared the consistency checked 1309. If there is designation, you confirm consistency between interface of network side of communications equipment 86,906,1006 and definition of requesting interface of communication services in specifications for RCS 1307. If the consistency check is failed, you move to next definition of communications equipment. If the consistency check is passed, you register this communications equipment at the list of communications equipment cleared the consistency checked 1309. When definition of all communications equipment has been evaluated, you hand over the consistency checked list of communications equipment to activated process and all process have been done.

### Section 15.8.1: Examples of selecting communications equipment that satisfy specifications for RCS

FIG.2 shows p, q, and r as examples of specifications for RCS. Communications equipment that satisfies each of these and the followings are the examples selected from 3 types of equipment in FIG.8.9.10.

Since "p" is 2Mbps transmission circuits, 808 transmission circuits of A-ISLAN equipment comes under this. In other words, A-ISLAN equipment satisfies (yields no conflicts with) specifications for RCS of "p". Since "q" is 1.5 Mbps interface circuit, 1.5Mbps I interface circuit 914 of B-TDM equipment comes under this. In other words, B-TDM equipment satisfies specifications for RCS, "q". Since "r" is ISDN-B channel circuit and ISDN-H0 interface is designated, ISDN-B channel circuit 912 of B-TDM equipment and 913 correspondence of ISDN-HO come under this. In other words, B-TDM equipment satisfies (yields no conflicts with) specifications for RCS of "r".

### Section 15.9: Examples of process of selecting communications equipment that fits communication service model connecting communication points

FIG. 14 shows details of process to select communications equipment that fits communication service model connecting communication points 37.

At first, you identify information of communications equipment in order, by the step to identify communication services data of communications equipment 1401. You identify data of communications equipment according to sequence, which includes the number of terminal and capacity limitation other than characteristics of communications equipment (section 15.3.3). You identify communication service model in order, which is used in the designated communications network 1403, from data of identified communications equipment. And you confirm consistency between characteristics of communication services and communications equipment of network side 82,902,1002,1406. What characteristics of communications equipment of network side 82,90,1002 are communication services of network side 85,905,1005 and interface of network side 86,906,1006. Among this, confirming consistency of interface of network side 86,906,1006, definition of providing interface of communication services 12 should be designated in characteristics of communication services. If the result of confirming consistency between characteristics of communication services and communications equipment of network side 82,902,1002 is all right, you carry out process of accommodating (the communication service model) temporarily in communications equipment 1408. When accommodation is not possible because of limitation of the number of terminal and limitation of data volume, you move to next process that evaluates definition of communications equipment. Here, temporary accommodation does not literally mean to be accommodated. It is the purpose to confirm whether limitation of the number of terminal and limitation of data volume etc. have been cleared or not. If temporary accommodation is possible, you identify next used communication service model 1411. If it exists, you move to process of confirming consistency between characteristics of communication services and communications equipment of network side 82,902,1002,1406. If the consistency check is failed, you move to process of identifying data of communications equipment 1401. If there is no communication service model by the step to identify communication service model in order, which is used in the designated communications network 1403, or by the step to identify next used communication service model 1411, it means that all temporary accommodation of communication services has been done. In such a case, you register this communications equipment at the list of communications equipment cleared the consistency check 1405. When all types of communications equipment have been evaluated, you hand over the list of communications equipment cleared the consistency check to the caller (originated) process 1410 and all processes have been done.

### Section 16: Realization of equipment for determining design conditions of communications network

FIG.15 shows example of equipment for determining design conditions of communications network. Uniting with equipment of making communication network model usually realizes it. It is possible to realize it with other equipment and to exchange data on communication circuits and also possible to exchange data by using magnetic tapes and floppy disks etc.

Conditions for making design drawings of communications network inputted from input unit 1501 is analyzed at detailed means holding unit and is recorded in data holding unit 1504. Communication network model is built at data holding unit 1504 by these conditions. Instruction of selecting communications equipment is also inputted from input unit 1501 and data of communications equipment recorded in data holding unit 1504 is read by detailed means holding unit 1503 and communications equipment is selected. Record of selected communication equipment is recorded in data holding unit 1504. Display unit 1502 shows this situation all the times. Operator evaluates them and input further instructions and data from input unit 1501. The data in data holding unit 1504 will be transferred to back-up holding unit 1505 and will be read when the system is reactivated.

Equipment for determining design conditions of communications network holds a lot of means inside of detailed means holding unit 1503 to fulfill the purpose. Every time signal comes from input unit 1501, it is analyzed at signal receiving means 1601 and is sent to corresponding means. Also signal comes from one means and it is analyzed at detailed means holding unit 1601 and is often sent to another means. FIG.16 shows means directly related to this invention. Signal from signal receiving means 1601 is sent to the following means. Means for setting specifications for PCS to design target communication network 1602. Means for setting specifications for RCS to design target communication network 1603. Means for selecting communications equipment that satisfies specifications for PCS 1604 Means for selecting communications equipment that fits communication service model provided by communication network model 1605. Means for selecting communications equipment that satisfies specifications for RCS 1606. Means for selecting communications equipment that fits communication service model connecting communication points 1607. And means for determining other design conditions of communications network 1608. It is possible to add means for making design drawings of communications network but we omit the details.

### Section 16.1: Means for setting specifications for PCS to design target communications network

FIG.17 shows details of means for setting specifications for PCS to design target communications network 1602.

Signal from signal receiving means 1601 is analyzed at input signal analysis means 1701 and is sent to means for setting specifications for PCS in a narrow sense 1702 and means for setting definition of providing interface of communication services 1703 when communications network is designated. Means for setting specifications for PCS in narrow sense 1702 sets correspondence between communications network and specifications for PCS. Means for setting definition of providing interface of communication services 1703 sets correspondence between communications network and specifications for PCS. Input signal analysis means 1701 can be replaced with signal receiving means 1601.

### Section 16.2: Means for setting specifications for RCS to target communications network

FIG.18 shows details of means for setting specifications for RCS to target communications network 1603.

Signal from signal receiving means is analyzed at input signal analysis means 1801. And signal is sent to means for setting specifications for RCS in a narrow sense 1802 and means for setting definition of requesting interface of communication services 1803 when communications work is designated. Means for setting specifications for RCS in narrow sense 1802 sets correspondence between communications network and specifications for RCS. Means for setting definition of requesting interface of communication services 1803 sets correspondence between communications network and definition of specifications for RCS. Input signal analysis means 1801 can be replaced with signal receiving means 1601.

### Section 16.3: Means for selecting communications equipment that satisfies specifications for PCS

FIG.19 shows details of means for selecting communications equipment that satisfies specifications for PCS 1604. You identify characteristics of communication services in order from means for identifying communication service characteristics of communications equipment 1901. Signals is inputted in means for confirming consistency between communication services of service providing side of communications equipment 83,903,1003 and specifications for PCS in a narrow sense 11 1902 on significant communications network. If the consistency check is passed and also definition of providing interface of communication services 12 is not designated, you input signal in means for registering this communications equipment at the list of communications equipment cleared the consistency check 1904. If definition of providing interface of communication services 12 is designated, you input signal in means for confirming consistency between providing interface of communications equipment 84,904,100 and definition of providing interface of communication services in specifications for PCS 12 1903. If the consistency check is passed, you input signal in means for registering this communications equipment at the list of communications equipment cleared the consistency check 1904.

### Section 16.4: Means for selecting communications equipment that fits communication service model provided by communication network model

FIG.20 shows details of means for selecting communications equipment that fits communication service model provided by communication network model 1605.

At first, you identify data of communications equipment in order, by means for identifying data of communications equipment 2001,which includes limitation of the number of terminal and capacity limitation other than characteristics of communication services of communications equipment (Section 15.3.3). You input signal in means for identifying model of PCS provided 2002 by designated communications network for the identified data. For every providing communication service model, signal is inputted in means for confirming consistency between characteristics of communication services and special definition of communications equipment of service providing side 81,901,1001 2003. If the consistency check is passed, signal is inputted in means for accommodating (the model of PCS) temporary to communications equipment 2004. You can decide that all of PCS can be accommodated temporarily in communications equipment and register communications equipment in the consistency checked list, by evaluating all signals as follow. Signal to means for registering this communications equipment at the list of communications equipment cleared the consistency check in 2005. Signal from means for identifying information of communication equipment 2001. Signal from means for identifying model of PCS provided 2002. And signal form means for accommodating (the model of PCS) temporary to communications equipment 2004.

### Section 16.5: Means for selecting communications equipment that satisfies specifications for RCS

FIG.21 shows details of means for selecting communications equipment that satisfies specifications for RCS 1606. You identify definition of communications equipment according in order from means for identifying communication services characteristics of communications equipment 2101. Signal is inputted in means for confirming consistency between communication services of network side of communications equipment 85,905,1005 and specifications for RCS in a narrow sense 21 2102 on significant communications network. If the consistency check is passed and also definition of requesting interface of communication services 22 is not designated, you input signal in means for registering this communications equipment at the list of communications equipment cleared the consistency check 2104. If definition of requesting interface of communication services 22 is designated, you input signal in means for confirming consistency between interface of network side of communications equipment 86,906,1006 and definition of requesting interface of communication services in specifications for RCS 22 2103. If the consistency check is passed, you input signal in means for registering this communications equipment at the list of communications equipment cleared the consistency check 2104. Section 16.6: Means for selecting communications equipment that fits communication service model connecting communication points

FIG.22 shows details of means for selecting communications equipment that fits communication service model connecting communication points 1607. You identify data of communications equipment in order from means for identifying data of communications equipment 2201, which includes limitation of the number of terminal and capacity limitation other than definition of communication services (Section 15.3.3).

You input signal in means for identifying used communication service model 2202 by using designated communications network for the identified data. For every using communication service model, signal is inputted in means for confirming consistency between characteristics communication services and communications equipment of network side 82,902,1002 2203. If the consistency check is passed, signal is inputted in means for accommodating (communication service model) temporary to communications equipment 2204. You can decide that all communication service models used by model of communications network can be accommodated by the communication equipment temporary and register communications equipment in the consistency checked list, by evaluating all signals as follow. Signal to means for registering communications equipment in consistency checked list 2205. Signal from means for identifying data of communications equipment 2201. And signal from means for identifying used communication service model 2202.

### INDUSTRIAL APPLICABILITY

In previous communications network design system, normally communications equipment has been already designated or is designated in the early stage of making design drawings. It was a serious problem for the people that choose communications equipment to make clear the conditions other than communications equipment in the beginning and to choose the most suitable communications equipment. Actually it was impossible in the past. However, this invention makes possible to select communications equipment that fits the conditions that has become clear in any phase of making design drawings of communications network. And when there is no interest in selecting communications equipment, you make design drawings of communications network other than communications equipment, such as circuit number and it is possible not to select communications equipment. It is also possible to collect information of communications network in current operation and to select the most suitable communications equipment. In other words, it is effective in the case of selecting suitable communications equipment for communications network.

When multiple communication networks request and use communication services, it is usually necessary to designate all related communications equipment of communications network in the beginning. However, this invention makes possible to designate the necessary communications equipment of communications network whenever the necessity arises. In other words, it became possible to select the most suitable communications equipment for the situation that has become clear by making design drawing of multiple communication networks in detail. In other words, it is effective in the case of making design drawings of correlated multiple communication networks.

If specifications for PCS designate communication network model, it is possible to provide communication service model to other communication network model. Furthermore, if specifications for RCS, flow allotment algorithm and capacity allotment algorithm are designated, it is possible to make design drawings of communications network other than communications equipment. In other words, this invention makes possible to make design drawings of communications network other than communications equipment without designating communications equipment. It became possible to make design drawings of communications network with communications equipment or basic scheme of communication that has not existed before. Consequently it is possible to obtain effective and requesting conditions of new basic scheme of communication or communications equipment at the level of communications network in the early stage of research and development. In other words, it is effective for research and development of new basic scheme of communication or communications equipment.

## Claims

1. An method for determining design conditions of communication network model, comprising:
a process that sets specifications for PCS to design target communication network model.

2. The method for determining design conditions of communication network model, comprising:
a process that sets specifications for RCS to design target communication network model.

3. The method for determining design conditions of communication network model, comprising:
(a) a process that sets specifications for PCS to design target communication network model; and
(b) a process that sets specifications for RCS to design target communication network model.

4. The method for determining design conditions of communication network model, comprising:
(a) a process that sets specifications for PCS to design target communication network model; and
(b) a process of selecting communications equipment that satisfies specifications for PCS.

5. The method for determining design conditions of communication network model, comprising:
(a) a process that sets specifications for PCS to design target communication network model; and
(b) a process of selecting communications equipment that fits communication service model provided by communication network model.

6. The method for determining design conditions of communication network model, comprising:
(a) a process that sets specifications for RCS to design target communication network model; and
(b) a process of selecting communications equipment that satisfies specifications for RCS.

7. The method for determining design conditions of communication network model, comprising:
(a) a process that sets specifications for RCS to design target communication network model; and
(b) a process of selecting communications equipment that fits communication service model connecting communication points.

8. The method for determining design conditions of communication network model, comprising:
(a) a process that sets specifications for PCS to design target communication network model;
(b) a process that sets specifications for RCS to design target communication network model;
(c) a process of selecting communications equipment that satisfies specifications for PCS; and
(d) a process of selecting communications equipment that satisfies specifications for RCS.

9. An apparatus for determining design conditions of communication network model, comprising:
means that sets specifications for PCS to design target communication network model.

10. The apparatus for determining design conditions of communication network model, comprising:
means that sets specifications for RCS to design target communication network model.

11. The apparatus for determining design conditions of communication network model, comprising:
(a) means that sets specifications for PCS to design target communication network model; and
(b) means that sets specifications for RCS to design target communication network model.

12. The apparatus for determining design conditions of communication network model, comprising:
(a) means that sets specifications for PCS to design target communication network model; and
(b) means of selecting communications equipment that satisfies specifications for PCS.

13. The apparatus for determining design conditions of communication network model, comprising:
(a) means that sets specifications for PCS to design target communication network model; and
(b) means of selecting communications equipment that fits communication service model provided by communication network model.

14. The apparatus for determining design conditions of communication network model, comprising:
(a) means that sets specifications for RCS to design target communication network model; and
(b) means of selecting communications equipment that satisfies specifications for RCS.

15. The apparatus for determining design conditions of communication network model, comprising:
(a) means that sets specifications for RCS to design target communication network model; and
(b) means of selecting communications equipment that fits communication service model connecting communication points.
